# EUROPEAN PATENT SPECIFICATION

(11) **EP 0 620 885 B1**
(45) Date of publication and mention of the grant of the patent: **05.02.1997**
(21) Application number: 93900312.5
(22) Date of filing: 18.12.1992
(51) Int. Cl.: E04F 15/10, B29C 65/04

(54) **TILES, METHOD OF MANUFACTURING TILES FROM PLASTIC MATERIAL AND EQUIPMENT FOR FACILITATING SUCH MANUFACTURE**
LAMELLEN, EINE METHODE ZUR HERSTELLUNG DERSELBEN AUS KUNSTSTOFFMATERIAL SOWIE AUSRÜSTUNG ZUM DURCHFÜHREN DER METHODE
DALLES, LEUR PROCEDE DE FABRICATION A PARTIR DE MATIERE PLASTIQUE ET EQUIPEMENT FACILITANT CETTE FABRICATION

(30) Priority: 30.12.1991 GB 9127473
(43) Date of publication of application: 26.10.1994
(73) Proprietor: THE AMTICO COMPANY LIMITED, Bridgewater, Somerset TA6 4PA (GB)
(72) Inventor: FANTI, Luigi, Styvechale Coventry CV3 6FZ (GB)
(74) Representative: Lawrence, John
(86) International application number: GB9202361
(87) International publication number: WO9313281

(56) References cited:
- US-A- 3 647 587
- US-A- 4 828 896

## Description

### BACKGROUND OF THE INVENTION

### 1. Field of the Invention

This invention relates to tiles, to a method of manufacturing tiles from plastics materials, and to equipment for facilitating such manufacture.

In particular, although not exclusively, the present invention is concerned with the manufacture of plastics floor tiles which have a predefined pattern of blocks with a wood grain appearance which resemble wooden parquet floors.

### 2. Discussion of Prior Art

One way of manufacturing such tiles, in the past, has been to pre-print each tile with a preset pattern of blocks. In this case every tile has exactly the same pattern of blocks and it is difficult to make the whole floor resemble a natural wooden block parquet floor because it is impossible to achieve a random effect. To overcome this monotony, one could produce a number of sets of tiles with each set of tiles being of the same pattern of blocks as all the other sets but with different wood grain effects for each set of tiles. Such approaches have been quite expensive to produce because of the different sets of artwork required to make each tile. Furthermore, it is impossible to achieve a totally random effect.

An object of the present invention is to provide a plastics tile which is made of a number of predetermined shaped pieces which are joined together to produce a unitary tile.

### SUMMARY OF THE INVENTION

According to one aspect of the present invention there is provided a plastics tile comprising a plurality of discrete plastics pieces which are shaped relative to each other and assembled together to abut edge to edge in lower regions of the pieces and form a recess above each mutually abutting edge of abutting pieces in upper regions of the pieces, said pieces being joined together along said mutually abutting edges below the recesses to form a unitary tile.

Preferably the upper regions of the peripheral edge of each piece that abuts another piece is provided with a chamfer to form V-shaped recesses extending down from the top surface of the tile along the mutually abutting edges of the pieces, and the pieces are joined together through the full depth of the extent of the edges that contact adjoining pieces below the bottom of the recesses.

Preferably the joins are continuous joins, but they could be joined at spots at spaced intervals along the edges between mutually abutting pieces.

In a preferred embodiment each piece comprises a top layer of translucent plastics material, a printed layer and a backing layer, and the pieces are joined together through the thickness of the backing layer.

According to a further aspect of the invention a method of manufacturing a tile comprises the steps of cutting a plurality of complementary shaped pieces from a sheet of plastics material, the pieces having recessed edges in upper regions thereof, assembling the pieces to form the precursor of a tile of the required shape with abutting edges below said recesses between each pair of adjacent pieces, and effecting a join at said edges below the bottom of each said recess to form a unitary tile.

Conveniently at least two sets of at least two pieces cut from sheet stock are used to assemble each unitary tile, the pieces of each set being shaped so that they can be Interengaged in a plurality of different ways to give the same shaped unitary tile whereby to provide a reduced probability of producing two tiles of identical appearance from sheet stock of standard appearance.

Preferably the join is effected by welding using a tool that localises the heating effect to the mutually abutting edges below the bottom of each recess. The preferred form of heating is dielectric heating, but other forms of joining such as ultrasonic welding, or heat bonding using heated platens could be used. If desired forms of joining can be used that do not rely on heating, for example adhesive bonding or solvent bonding may be used.

The method of manufacture is conveniently conducted using a dielectric eating device in which the shaped pieces are assembled in a rimmed base member of the device and are conjoined by welding along mutually abutting edges between the base member and an electrode of the heating device, which electrode has projections entering recesses formed along said mutually abutting edges.

### BRIEF DESCRIPTION OF DRAWING

The present invention will now be described by way of example and with reference to the accompanying drawing, in which:
Figure 1 is a plan view of a single tile constructed in accordance with the present invention, made of a plurality of pieces which are joined together,
Figure 2 is a cross-sectional elevation, on an enlarged scale, through part of the tile taken along line II-II of Figure 1, showing, schematically, the join between two adjacent pieces,
Figure 3 shows a dielectric heating device for making the tile of Figure 1, and
Figure 4 shows, in greater detail, the design of part of one electrode of the device of Figure 3.

### DESCRIPTION OF PREFERRED EMBODIMENTS

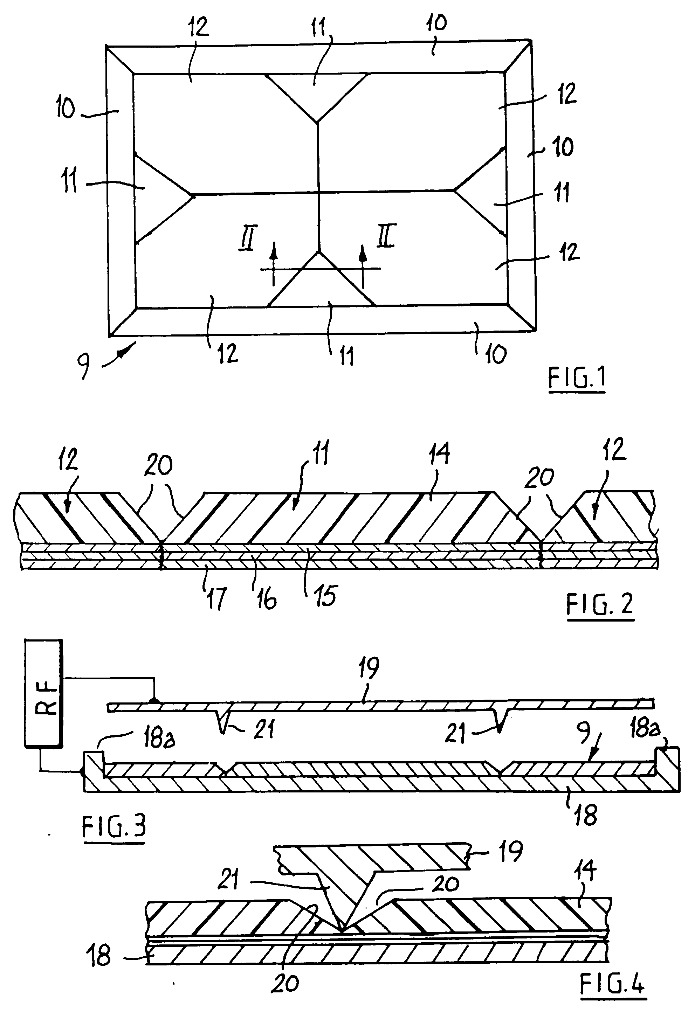

Referring to Figure 1, each tile 9 is made of three sets of pieces 10, 11 and 12. Each set of pieces (10, 11 or 12) comprises four identically shaped pieces. All the pieces for each set are cut from a large sheet of plastics material approximately 1 metre wide.

The sheet of material comprises laminations consisting of a top translucent PVC wear layer 14 approximately 1.0 mm thick which is bonded to a thin PVC film 15 which is printed with a woodgrain effect with a coloured background. The film 15 is bonded to a white PVC background layer 16 which has the effect of lightening the coloured background of the film 15. The white layer 16 is bonded to a black PVC backing layer 17. The bonding of the layers is achieved by laying up the layers 14, 15, 16 and 17 and heat bonding them under pressure to produce a laminated sheet that is about 2.5 mm thick.

Although the pieces making up each set of pieces 10, 11 or 12 are of identical size and shape and are cut from a large sheet of the material, the wood grain effect varies from one piece to another, despite the fact that the wood grain effect pattern is repeated on the large sheet from which the pieces are cut. Furthermore, because the pieces of each set are identical and symmetrical, even if, against the odds, the pattern were the same on a number of identically shaped pieces of any set, it is highly unlikely that one would produce two tiles with exactly the same woodgrain effects on all the pieces of two or more tiles. Accordingly, by assembling the sets of pieces 10, 11 and 12 to make a tile it is possible to achieve a totally random effect.

As described, three sets of four pieces each, are used but other arrangements are possible from a minimum of two sets of at least two pieces per set.

Each of the pieces is cut from the larger sheet of material using a tool which is described in our International Patent Application No. PCT/GB92/02115. Each piece has a chamfered edge 20 in its upper region in which the chamfer is approximately 45° and extends to a depth not deeper than the film 15.

The four pieces of each of the three sets 10, 11 and 12 are assembled by abutting the edges of the pieces over lower regions thereof to make a precursor tile measuring 300 x 300 mm, and one or more of such tile precursors are held in a dielectric heating welding machine shown schematically in Figure 3 which consists of a metal base 18 having rims 18a and a metal top member 19. The top member 19 has projections 21 which define a pattern of shapes identical to the pieces of the sets 10, 11 and 12 and effectively defines weld lines corresponding to the abutting edges between the pieces 10, 11 and 12. The base 18 and top member 19 effectively constitute the electrodes of a radio frequency dielectric heating unit.

The power supply to the electrodes 18 and 19 is taken from a 15Kw, 29Ka power supply unit running at a frequency of 27MHz and automatically adjusts the voltage level to maintain correct dielectric heating of the layers to be welded. In order to reduce problems of localised overheating in the welds due to presence of moisture, the base 18 and top member 19 are preheated to a temperature between 40°C and 100°C by means of water-heated heat exchangers (not shown) in contact with the base 18 and the top member 19. Heating the base 18 and top member 19 also has a beneficial effect by imparting some heat into the region to be welded but not sufficient heat to damage the wear layer 14 of the tile.

Referring to Figure 4, the projections 21 on the top electrode 19 are of a smaller included angle than that defined by the two chamfered edges 20 of the abutting pieces (which is about 136°).

To avoid thermal damage to the exposed upper surface of the wear layer 14 during the welding, the semi-angle of the recess created by the edges 20 should be greater than the semi-angle of the projection. A semi-angle of the recess exceeding 45° (e.g. 68°) and a semi-angle of the projection of not more than 45° is preferred.

By providing the top electrode 19 with a sharp point at the tip of the projections 20, the shortest path for the electrical field generated during dielectric welding will be vertically through the tile between the member 19 and the base 18. This ensures that only a minimum amount of the tile is heated when the pieces are welded together and avoids disfiguring damage to the exposed upper surface of the tile. This lack of damage is made possible by the fact that the pieces are chamfered or recessed downwardly from the top surface.

The base member 18 can have two adjustable rims 18a whereby after laying the twelve pieces 10, 11 and 12 onto the base member in the required array (e.g. as shown in Figure 1) the rims 18a are moved to close the pieces together to form the rectangular configuration shown with confronting edges in lower regions of the pieces in abutment.

The electrode 19 is lowered into contact with the assembled pieces and an electrical current at a frequency of 27 MHz is applied through the base 18 and electrode 19 to generate dielectric heating and melt and thereby fuse, or weld, only the lower regions (that is to say the layers 15, 16 and 17) to form a unitary tile. In this way all of the pieces are butt welded together along welded joints extending around the various pieces.

Whilst it is preferred to effect the welding as a "single-shot" process using radio frequency energy sufficiently powerful to weld all the seams simultaneously, it is to be understood that other techniques can be used. We have used a "spot-welding" technique where electromagnetic dielectric heating was used to effect "spot" welds at closeiy spaced intervals along each line of abutting edges, instead of producing a continuous weld, however it has been found that after the tiles had been laid in place on a floor for some time, the location of the spot welds became manifest as slight blemishes in the unitary tile.

The welding can also be carried out from the underside of the tile, that is to say from the backing layer 17 side of the tile. In this case the pieces are laid on the base of the jig with the translucent layer 14 facing the base and the top member 19 is brought down against the backing layer 17 to melt and fuse the abutting edges of the layers 15, 16 and 17. In this case the base 18 of the jig would have protrusions (similar in shape and size to the protrusions 20) that fit into the "V" shape defined by the chamfered edges of the pieces 10, 11 and 12 as shown in Figure 4. It is much more difficult to assemble the pieces on a base 5 plate 18 which has projections corresponding to the seam lines because each piece has to locate perfectly in the recesses formed by the raised projections. However there may be instances where it is advantageous to concentrate the electric field on the back surface of the tile.

0 An essential requirement of layers to be welded together in accordance with the dielectric heating embodiment of the present invention is that they are susceptible to absorption of electromagnetic energy by the dielectric effect. Almost all solid non-conductive plastics will absorb energy by dielectric heating to a certain extent. Some plastics such as polyethylene and polystyrene for example have relatively low dielectric heat absorption characteristics; these are often said to have a low "loss factor". On the other hand PVC has a relatively high "loss factor" and will absorb electromagnetic energy by the dielectric effect. Therefore if one wishes to use a low "loss-factor" plastic as the backing layer one will need to modify its characteristics to increase its "loss-factor" by the addition or alloying of particles or other polymers.

In the above embodiment the method of joining is achieved using a dielectric heating method. Other forms of welding such as, for example, ultrasonic welding, or heat bonding using heated platens which are pressed into contact with the lower layers of the tile could be used for materials which will not absorb energy by dielectric heating. Indeed the joining may be done by adhesive bonding or by solvent bonding, although this is thought to be slightly more messy than the preferred welding methods.

In order to obtain an attractive tile it has been found to be essential to effect bonding or joining only in the lower regions of each tile, and not in the translucent layer 14. The chamfered edges of the pieces give the appearance of the wood grain extending through the entire depth of the translucent layer. In addition, by only joining those layers which are normally out of sight, one can use different thermoplastics at the surface of the tile which would be otherwise non-weldable using dielectric heating methods or otherwise unsuitable for joining or bonding.

Although the present invention is eminently suitable for making parquet type floor tiles with woodgrain patterning of the shapes shown in Figure 1, the invention may be used to join assembled pieces of any shape and colour to make unitary tiles.

In the embodiments described above, the pieces have an angled chamfer. It is to be understood that the top edge of each piece may be cut back with a vertical, rounded or other shaped edge which forms a small groove or recess in the top face of the tile at each join between pieces.

## Claims

1. A plastics tile (9) comprising a plurality of discrete plastics pieces (10,11,12) which are shaped relative to each other and assembled together to abut edge to edge in lower regions of the pieces and form a recess above each mutually abutting edge of abutting pieces in upper regions of the pieces, said pieces being joined together along said mutually abutting edges below the recesses to form a unitary tile.

2. A tile (9) according to claim 1, wherein the upper regions of the peripheral edge of each piece that abuts another piece is provided with a chamfer (20) to form V-shaped recesses extending down from the top surface of the tile along the mutually abutting edges of the pieces, and the pieces (10,11,12) are joined together through the full depth of the extent of the edges that contact adjoining pieces below the bottom of the recesses.

3. A tile according to claim1 or claim 2, wherein said joining together is by continuous joins.

4. A tile according to claim 1 or claim 2, wherein the pieces (10,11,12) are joined together by spot joining the pieces at spaced intervals along the edges between mutually abutting pieces.

5. A tile according to any one preceding claim, wherein each piece comprises a top layer of translucent plastics material (14), a printed layer (15) and a backing layer (17), and the pieces are joined together only through the thickness of the backing layer.

6. A tile according to claim 5, wherein there is a coloured layer (16) between the backing layer (17) and the printed layer (15).

7. A method of manufacturing a tile constructed in accordance with claim 1, comprising the steps of cutting a plurality of complementary shaped pieces (10,11,12) from a sheet of plastics material, the pieces having recessed edges in upper regions thereof, assembling the pieces to form the precursor of a tile of the required shape with abutting edges below said recesses between each pair of adjacent pieces, and effecting a join at said edges below the bottom of each said recess to form a unitary tile.

8. A method according to claim 7, wherein the join is effected by welding.

9. A method according to claim 8, wherein the welding step is carried out by dielectric heating of the pieces in the vicinity of the join.

10. A method according to claim 7, 8 or 9, in which at least two sets of at least two pieces (10,11,12) cut from sheet stock are used to assemble each unitary tile (9), the pieces of each set being shaped so that they can be interengaged in a plurality of different ways to give the same shaped unitary tile whereby to provide a reduced probability of producing two tiles of identical appearance from sheet stock of standard appearance.

11. In a method according to claim 7, 8 or 9, the use of a welding jig in which the shaped pieces (10,11,12) are assembled in a rimmed base member of the jig and are conjoined by welding along mutually abutting edges through dielectric heating of 25 the pieces between the base member and a top electrode (21), which top electrode has projections entering recesses formed along said mutually abutting edges.

12. A method according to claim 11, in which said recesses have a semi-angle greater than 45° and said 30 projection has a semi-angle of not more than 45°.

13. In a method according to claim 11 or claim 12, the use of a base member with at least one adjustable rim to close edges of the pieces together prior to welding.

14. A method according to claim 8, wherein the join is effected by ultrasonic welding.

15. A method according to claim 7, wherein the join is effected by adhesive bonding or solvent bonding.

## Patentansprüche

1. Kunststofffliese (9) aus einer Mehrzahl von getrennten Kunststoffteilen (10,11,12), die relativ zueinander geformt und zusammengefügt sind, derart, daß sie in unteren Bereichen der Stücke Kante an Kante aneinanderstoßen und einen Einschnitt oberhalb jeder wechselseitigen Stoßkante der aneinanderstoßenden Teile in oberen Bereichen der Teile bilden, wobei die Stücke aneinander entlang der wechselseitigen Berührungskanten unterhalb der Einschnitte miteinander verbunden sind, um eine einheitliche Fliese zu bilden.

2. Fliese nach Anspruch 1, bei der die oberen Bereiche der Außenränder jedes Teiles, welches an einem anderen Teil anstößt, mit einer Phase (20) versehen ist, um V-förmige Einschnitte zu bilden, die sich von der Oberfläche der Fliese nach unten entlang der wechselseitig berührenden Enden der Stücke erstrecken, und wobei die Stücke (10,11,12) über die volle Tiefe des Bereiches der Kanten, die benachbarte Stücke unterhalb des Bodens der Einschnitte berühren, miteinander verbunden sind.

3. Fliese nach Anspruch 1 oder 2, bei der das Zusammenstoßen über eine fortlaufende Fuge erfolgt.

4. Fliese nach Anspruch 1 oder 2, bei der die Stücke (10,11, 12) durch Punktberührung der Stücke in voneinander getrennten Intervallen entlang der Enden zwischen wechselseitig aneinanderanstoßenden Teilen zusammengefügt sind.

5. Fliese nach einem der vorangehenden Ansprüche, bei dem jedes Stück eine obere Schicht aus transparentem Kunststoffmaterial (14) aufweist, eine bedruckte Schicht (15) und eine Hintergrundschicht (17), wobei die Stücke lediglich durch die Dicke der Hintergrundschicht miteinander verbunden sind.

6. Fliese nach Anspruch 5, bei der eine gefärbte Schicht (16) zwischen der Hintergrundschicht (17) und der bedruckten Schicht (15) vorgesehen ist.

7. Verfahren zur Herstellung einer Fliese, aufgebaut nach Anspruch 1, mit den Schritten des Schneidens einer Mehrzahl von komplimentär geformten Stücken (10,11,12) aus einer Platte aus Kunststoffmaterial, wobei die Teile in ihren oberen Bereichen ausgesparte Ränder aufweisen, des Zusammenstellens der Teile, um einen Vorläufer der Fliese in der benötigten Form zu bilden, mit aneinanderstoßenden Enden unterhalb der Aussparungen zwischen jedem Paar von aneinanderstoßenden Teilen und des Bewirkens einer Verbindung dieser Ränder unterhalb des Bodens jeder Aussparung, um eine einheitliche Fliese zu bilden.

8. Verfahren nach Anspruch 7, bei dem das Verbinden durch Schweißen bewirkt wird.

9. Verfahren nach Anspruch 8, bei dem der Schweißschritt durch dielektrisches Heizen jedes Stückes in der Nähe der Verbindung ausgeführt wird.

10. Verfahren nach Anspruch 7, 8 oder 9, bei dem wenigstens zwei Sätze von wenigstens zwei Teilen (10,11,12), die vom Plattenmaterial geschnitten sind, zur Zusammenstellung jeder einzelnen Fliese (9) eingesetzt werden, wobei die Teile jedes Satzes derart geformt sind, daß sie in einer Vielzahl unterschiedlicher Weisen zwischenverbindbar sind, um die gleich geformte Flieseneinheit zu bilden, wodurch eine eingeschränkte Möglichkeit zur Herstellung zweier Platten von identischer Erscheinung aus Plattenmaterial der Standard-Erscheinung gegeben ist.

11. In einem Verfahren nach einem der Ansprüche 7, 8 oder 9 die Benutzung einer Schweißschablone, in der die geformten Stücke (10,11,12) in einem mit einem Rand versehenen Basisteil der Schablone zusammengesetzt sind und durch Schweißen entlang der wechselseitig aneinanderstoßenden Enden verbunden sind durch dielektrische Heizung der Teile zwischen dem Basiselement und einer Kopfelektrode (21), wobei die Kopfelektrode Vorsprünge aufweist, die in die Rücksprünge eingreift, die entlang den wechselseitig aneinanderstoßenden Enden ausgebildet sind.

12. Verfahren nach Anspruch 11, in dem die Rücksprünge einen Halbwinkel größer als 45° aufweisen und bei dem der Vorsprung einen Halbwinkel von nicht größer als 45° aufweist.

13. In einem Verfahren nach Anspruch 11 oder 12 der Gebrauch eines Basiselementes mit wenigstens einem einstellbaren Rand, um die Kanten der Stücke vor dem Schweißen zu schließen.

14. Verfahren nach Anspruch 8, bei dem die Verbindung durch Ultraschallschweißen vorgenommen wird.

15. Verfahren nach Anspruch 7, bei dem die Verbindung durch Verkleben oder Lösungsmittel vorgenommen wird.

## Revendications

1. Dalle en plastique (9) comprenant une pluralité de pièces en plastique discrètes (10, 11, 12) qui sont conformées les unes par rapport aux autres et assemblées ensemble de manière à venir en butée bord à bord dans des régions inférieures des pièces et à former un évidement au-dessus de chaque bord mutuellement en butée de pièces en butée dans des régions supérieures des pièces, lesdites pièces étant jointes ensemble le long desdits bords mutuellement en butée au-dessous des évidements afin de former une dalle unitaire.

2. Dalle (9) selon la revendication 1, dans laquelle les régions supérieures du bord périphérique de chaque pièce qui vient en butée contre une autre pièce sont munies d'un chanfrein (20) afin de former des évidements en forme de V s'étendant vers le bas depuis la surface supérieure de la dalle le long des bords mutuellement en butée des pièces, et les pièces (10, 11, 12) sont jointes ensemble par l'intermédiaire de toute la profondeur de l'étendue des bords qui entrent en contact avec des pièces contiguës au-dessous du fond des évidements.

3. Dalle selon la revendication 1 ou 2, dans laquelle ladite jonction ensemble est réalisée au moyen de joints continus.

4. Dalle selon la revendication 1 ou 2, dans laquelle les pièces (10, 11, 12) sont jointes ensemble en joignant par points les pièces selon des intervalles espacés le long des bords entre des pièces mutuellement en butée.

5. Dalle selon l'une quelconque des revendications précédentes, dans laquelle chaque pièce comprend une couche supérieure en une matière plastique translucide (14), une couche imprimée (15) et une couche arrière (17), et les pièces sont jointes ensemble seulement par l'intermédiaire de l'épaisseur de la couche arrière.

6. Dalle selon la revendication 5, dans laquelle il y a une couche colorée (16) entre la couche arrière (17) et la couche imprimée (15).

7. Procédé de fabrication d'une dalle construite selon la revendication 1, comprenant les étapes de découpe d'une pluralité de pièces de conformations complémentaires (10, 11, 12) à partir d'une feuille en matière plastique, les pièces comportant des bords évidés dans leurs régions supérieures, d'assemblage des pièces pour former le précurseur d'une dalle de la conformation requise avec des bords venant en butée au-dessous desdits évidements entre chaque paire de pièces adjacentes, et de réalisation d'un joint au niveau desdits bords au-dessous du fond de chaque dit évidement afin de former une dalle unitaire.

8. Procédé selon la revendication 7, dans lequel le joint est réalisé par soudage.

9. Procédé selon la revendication 8, dans lequel l'étape de soudage est mise en oeuvre au moyen d'un chauffage diélectrique des pièces au voisinage du joint.

10. Procédé selon la revendication 7, 8 ou 9, dans lequel au moins deux jeux d'au moins deux pièces (10, 11, 12) découpées à partir d'un matériau de base en feuille sont utilisés pour assembler chaque dalle unitaire (9), les pièces de chaque jeu étant conformées de telle sorte qu'elles puissent être imbriquées selon une pluralité de différentes façons afin d'obtenir la même dalle unitaire conformée afin d'ainsi assurer une probabilité réduite de produire deux dalles d'apparences identiques à partir d'un matériau de base en feuille d'une apparence standard.

11. Procédé selon la revendication 7, 8 ou 9, incluant l'utilisation d'un outil de soudage dans lequel les pièces conformées (10, 11, 12) sont assemblées dans un élément de base à rebords de l'outil et sont jointes ensemble par soudage le long de bords mutuellement en butée par l'intermédiaire d'un chauffage diélectrique des pièces entre l'élément de base et une électrode supérieure (21), laquelle électrode supérieure comporte des protubérances entrant dans des évidements formés le long desdits bords mutuellement en butée.

12. Procédé selon la revendication 11, dans lequel lesdits évidements présentent un demi-angle supérieur à 45° et ladite protubérance présente un demi-angle non supérieur à 45°.

13. Procédé selon la revendication 11 ou 12, incluant l'utilisation d'un élément de base muni d'au moins un rebord réglable pour renfermer des bords des pièces ensemble avant soudage.

14. Procédé selon la revendication 8, dans lequel le joint est réalisé au moyen d'un soudage par ultrasons.

15. Procédé selon la revendication 7, dans lequel le joint est réalisé au moyen d'une liaison adhésive ou d'une liaison par solvant.
